# EUROPEAN PATENT APPLICATION

(11) **EP 4 250 250 A1**
(43) Date of publication of application: **27.09.2023**
(21) Application number: 22164121.0
(22) Date of filing: 24.03.2022
(51) Int. Cl.: G06V 20/10

(54) **CARBON SOIL BACKEND**

(71) Applicant: BASF SE, 67056 Ludwigshafen am Rhein (DE)
(72) Inventor: PRIESE, Benjamin, 67056 Ludwigshafen am Rhein (DE); KARAMI, Mojtaba, 50678 Koeln (DE); GEDMINAS, Laurynas, Durham North Carolina 27709 (US); HAERING, Tim, 67117 Limburgerhof (DE); DOERR, Manuel Josua, 67056 Ludwigshafen am Rhein (DE); BOEHM, Julian, 67056 Ludwigshafen am Rhein (DE); PFRANG, David, 67056 Ludwigshafen am Rhein (DE); CHRIST, Thomas, 67061 Ludwigshafen am Rhein (DE)
(74) Representative: Maiwald GmbH

(57) **Abstract**

The present invention generally relates to digital farming. In order to facilitate the provision of sensor data with a high spatial coverage, a computer-implemented method (100) is provided for training a data-driven model for measuring a concentration of a physicochemical parameter from a target field, the method comprising:
a) providing (110) historical satellite imagery data collected from at least one field over a period of time;
b) providing (120) historical sensor data collected from the at least one field, wherein the historical sensor data provides a measurement or an estimation of the concentration of the physicochemical parameter over the period of time; and
c) training (130) the data-driven model with a training dataset based on the provided historical satellite imagery data and the historical sensor data, wherein the trained data-driven model is usable as a soft-sensor for measuring a concentration of the physicochemical parameter from the target field based on satellite imagery data acquired from the target field.

## Description

### FIELD OF THE INVENTION

The present invention generally relates to digital farming, and particularly relates to a computer-implemented method and an apparatus for training a data-driven model usable as a soft-sensor for measuring a concentration of a physicochemical parameter from a target field, a computer-implemented method and an apparatus for measuring a concentration of a physicochemical parameter from a target field, and to a computer program product.

### BACKGROUND OF THE INVENTION

Sensing and prediction based on sensor data becomes more and more important. A downside is that in principle for each location one or more sensors are necessary to collect data. In particular, in the technological area of environment protection and agriculture, this may require many expensive sensors well distributed over the world. In addition, these sensors need a fast internet connection.

### SUMMARY OF THE INVENTION

There may be a need to facilitate the provision of sensor data with a high spatial coverage.

The object of the present invention is solved by the subject-matter of the appended independent claims, wherein further embodiments are incorporated in the dependent claims.

According to a first aspect of the present invention, there is provided a computer-implemented method for training a data-driven model usable as a soft-sensor for measuring a concentration of a physicochemical parameter, the method comprising:
a) providing historical satellite imagery data collected from at least one field over a period of time;
b) providing historical sensor data collected from the at least one field, wherein the historical sensor data provides a measurement or an estimation of the concentration of the physicochemical parameter over the period of time; and
c) training the data-driven model with a training dataset based on the provided historical satellite imagery data and the historical sensor data, wherein the trained data-driven model is usable as the soft-sensor for measuring a concentration of the physicochemical parameter based on acquired satellite imagery data.

The apparatus and method as described herein provides a training method to train the historical sensor data with historical satellite data to provide a prediction model for determining "current/future" sensor data based on current satellite data. If the past sensor data for a particular filed is not available, the prediction model may also be used for determining the past sensor data based on past satellite data.

The satellite imagery data may also be referred to as remote sensing data, which may be accessible from artificial satellites. Examples of the satellites for providing agricultural information may include the American Landsat satellites, the European Sentinel 2 satellite system, the RapidEye constellation, the GeoEye-1 system, and the WorldView-3 system. The American Landsat satellites comprises eight satellites that take spectral data from the Earth each 16 to 18 days. The European Sentinel 2 satellite system pprovides multispectral data at 10 m pixel resolution for NDVI (Normalized Difference Vegetation Index) imagery, soil, and water cover every ten days. The RapidEye constellation comprises five satellites that provide multispectral RGB imagery, as well as red-edge and NIR bands at 5 m resolution. The GeoEye-1 system captures multispectral RGB data and NIR data at a 1.84 m resolution. The WorldView-3 (collects multispectral data from the RGB bands including the red-edge, two NIR bands, and 8 SWIR bands with a resolution of 1.24 m at nadir.

In some examples, the sensor data may be collected by sensors. Sensors are devices to monitor e.g. crops, environments, and soils and to obtain objective information from them. The sensors may be integrated in a platform, which is used to name the structures where sensors are placed and carried. For example, the sensors may be attached to ground vehicles or fixed to the ground within fields such as local weather stations. In such cases, the distance from the sensors to the target crop may be less than 2 m. Due to the proximity of the sensor to the plant, the data acquired increase in accuracy. In some examples, sensor data are manual measurements on certain locations. When compared to remote sensing, sensor data has better accuracy. However, a downside of sensor data is that in principle for each location one or more sensors are necessary to collect data. In particular, in the technological area of environment protection and agriculture, this may require many expensive sensors well distributed over the world. In addition, these sensors need a fast internet connection, which therefore further increases the complexity of deploying these sensors in the field.

The historical sensor data and historical satellite data may be retrieved from a database in a data management system. The historical sensor data is then combined with the historical satellite data to form training samples. In general, both historical sensor data and historical satellite data comprise a sensor coordinate with time series of area data. The historical sensor data may be matched to satellite images for the coordinate at which the historical data was acquired. In some examples, the historical sensor data and the historical satellite data may have been acquired at the same period of time. For example, both the historical sensor data and the historical satellite data were both taken in 2017. In some other examples, it may be considered to use the hypothesis that values of the physicochemical parameter are relatively stable overtime. One example of the physicochemical parameter may be soil organic carbon (SOC). For example, if the soil sample was taken in 2015, but a valid satellite image from 2021 is available, it is still possible to match the satellite image to the soil sample despite the rather large temporal distance.

The process of classification/regression incorporates the training of a model, which links the available spatio-temporal sensor data (univariate, e.g. individual land cover types/markers or laboratory soil measurements) as target quantity (costly data with sparse availability) to the input data (large-scale availability). The processes allow training on an individual pixel level, as well as object based image classification/regression (requiring the segmentation process). For a pixel-based approach, individual pixel features are created from the prepared image stack. The object-based approach extracts derived features like the mean and standard deviation of pixel values within a given boundary. The reusable model can be exchanged by a retrained model as soon as new data is available.

After the training, the model can be used to infer the target quantity in new areas, at no (or less) cost of deploying many expensive sensors in the field and at no (or less) cost of unlimited access with Internet connection.

As used herein, the term "physicochemical parameter" may refer to a physical property value and/or a chemical property value of an object of interest (e.g., environments, crop, soil, etc.) on a field. For example, the physicochemical parameter may comprise parameters collected from crop condition monitoring of the crops on the field, e.g., structure, health, and stress. In some examples, the physicochemical parameter may comprise parameters collected from soil condition monitoring of soil quality and property of the soil in the field, e.g., moisture, temperature, and organic matter. In some examples, the physicochemical parameter may comprise parameters collected from environmental condition monitoring of e.g., temperature, and humidity.

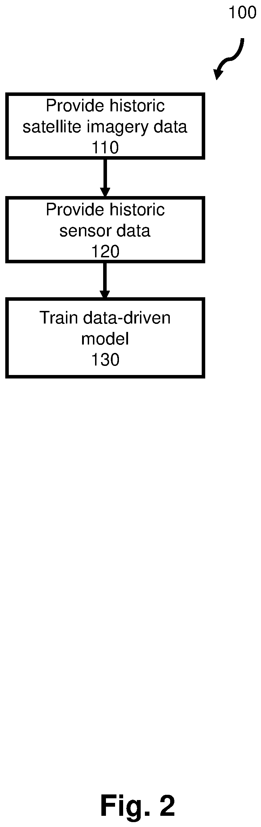

This will be explained in detail hereinafter and particularly with respect to the example shown in Fig. 2.

According to an embodiment of the present invention, the physicochemical parameter comprises:
- a physicochemical parameter measured from a crop on the at least one field;
- a physicochemical parameter measured from a soil of the at least one field;
- a physicochemical parameter measured from an atmosphere over the at least one field; or
- any combination thereof.

The physicochemical parameter measured from a crop may comprise physical property values and/or chemical property values measured from crop condition monitoring of the crops on the field, e.g., structure, health, and stress.

The physicochemical parameter measured from a soil may comprise physical property values and/or chemical property values measured from soil condition monitoring of soil quality and property of the soil in the field, e.g., moisture, temperature, and organic matter.

The physicochemical parameter measured from an atmosphere may comprise physical property values and/or chemical property values measured from environment condition monitoring of e.g., temperature, and humidity.

According to an embodiment of the present invention, the historical sensor data comprises data collected from a plurality of sensors distributed over the at least one field.

For example, for soil characteristics, several sensors distributed over a larger area may be needed.

According to an embodiment of the present invention, the received historical satellite imagery data is grouped into one or more satellite imagery data groups, each satellite imagery data group comprising historical satellite imagery data collected over a respective time range. For each satellite imagery data group, single satellite imagery data is determined representing the respective satellite imagery data group.

By using a single data point per group, it is possible to reduce the complexity and amount of the training data.

According to an embodiment of the present invention, the single satellite image data representing each satellite imagery data group comprises:
- an image having a plurality of pixels, wherein each pixel is selected from images in the satellite imagery data group based on a bare soil index value evaluated for the said pixel;
- an average over historical satellite imagery data within the satellite imagery data group;
- a median for each feature derived from the historical satellite imagery data within the satellite imagery data group; or
- an image containing satellite features selected for each pixel at a similar time point in an agricultural development stage determined via spectral index time series within the satellite imagery data group.

According to an embodiment of the present invention, historical environmental data collected from the at least one field over the period of time is received. The historical environmental data is added to the data-driven model for auxiliary enrichment.

For certain physicochemical parameter (such as SOC), the satellite imagery data may be further supported by environmental data for training the data-driven model. In some examples, it is possible to use daily environmental data and match a satellite image to the environmental data of the same day. In some examples, it is possible to use environmental data and match the satellite image to the environmental data of the same month.

According to an embodiment of the present invention, the received historical environmental data is grouped into one or more environmental data groups, each environmental data group comprising historical environmental data collected over a respective time range. For each environmental data group, single environmental data is determined representing the respective environmental data group.

By using a single data point per group, it is possible to reduce the complexity and amount of the training data.

According to an embodiment of the present invention, at least one feature is extracted from the historical satellite imagery data. The training dataset further comprises the at least one extracted feature.

The process of classification/regression incorporates the training of a model, which links the available spatio-temporal sensor data (univariate, e.g. individual land cover types/markers or laboratory soil measurements) as target quantity (costly data with sparse availability) to the input data (large-scale availability). The processes allow training on an individual pixel level, as well as object based image classification/regression. For a pixel-based approach, individual pixel features are created from the prepared image stack. The object-based approach extracts derived features like the mean and standard deviation of pixel values within a given boundary.

According to an embodiment of the present invention, the data-driven model comprises a random forest algorithm.

It will be appreciated that other data-driven models, such as artificial neural networks, and support vector machines, may also be used.

According to a second aspect of the present invention, there is provided a computer-implemented method for measuring a concentration of a physicochemical parameter from a field, comprising:
- receiving satellite imagery data acquired from the field;
- applying a soft-sensor to measure the concentration of the physicochemical parameter based on the received satellite imagery data, wherein the soft-sensor comprises a data-driven model that has been trained according to the method of any one of the preceding claims;
- providing the measured concentration of the physicochemical parameter.

The computer-implemented method may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise of one or more processors, a memory, a data interface, or the like.

According to an embodiment of the present invention, environmental data acquired from the field is received. The soft-sensor is applied to measure the concentration of the physicochemical parameter based on the received satellite imagery data and the received environmental data.

According to an embodiment of the present invention, the measured concentration of the physicochemical parameter is post-processed with a prescribed knowledge-based rule.

Besides the actual classification/regression, a further processing step may allow the implementation of rule-based expert knowledge, which can be connected in a post-processing step at the end with the actual classification/regression results. These expert rules can for example encode crop type specific growing patterns or general (e.g. local) agricultural practices.

According to a third aspect of the present invention, there is provided an apparatus for training a data-driven model usable as a soft-sensor for measuring a concentration of a physicochemical parameter from a field, comprising one or more processing units for carrying out the method of the first aspect and any associated example.

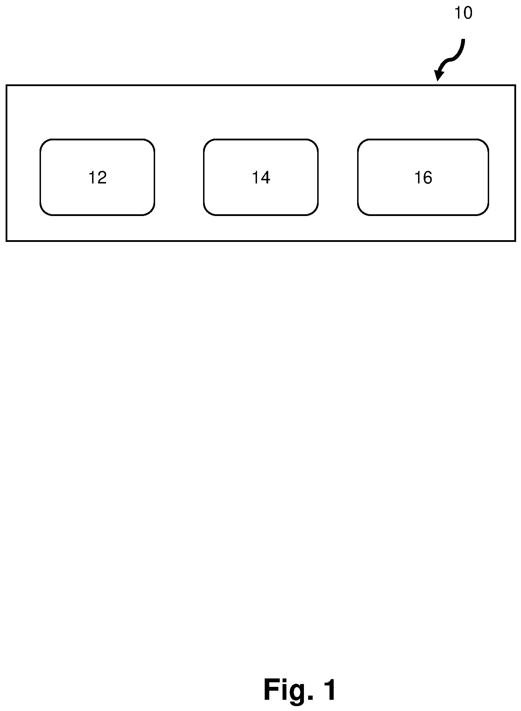

This will be explained in detail hereinafter and in particular with respect to the example shown in Fig. 1.

According to a fourth aspect of the present invention, there is provided an apparatus for measuring a concentration of a physicochemical parameter from a field, comprising one or more processing units for carrying out the method of the second aspect and any associated example.

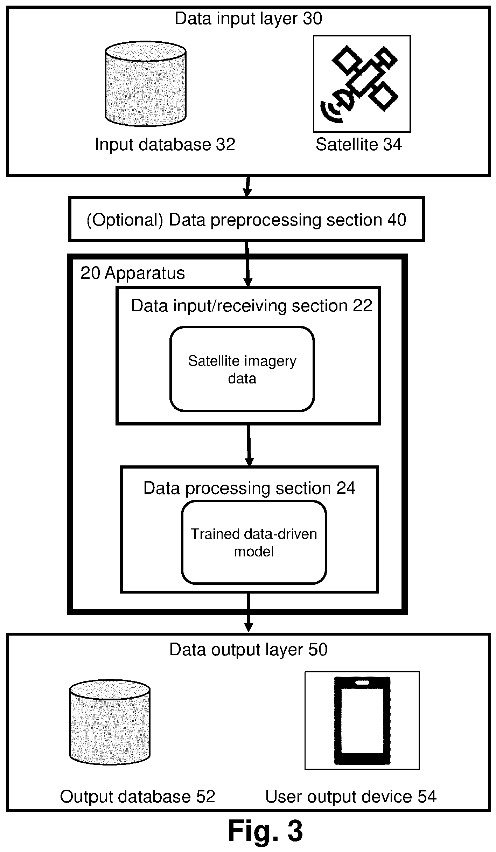

This will be explained in detail hereinafter and in particular with respect to the example shown in Fig. 3.

According to a further aspect of the present invention, there is provided a computer program product comprising instructions which, when the program is executed by one or more processing units, cause the one or more processing units to carry out the method of the first aspect to train a data-driven model usable as a soft-sensor for measuring a concentration of a physicochemical parameter from a field or to carry out the method of the second aspect to measure a concentration of a physicochemical parameter from a field.

As used herein, the term "field", also referred to as agricultural field, may be understood to be any area in which organisms, particularly crop plants, are produced, grown, sown, and/or planned to be produced, grown or sown.

As used herein, the term "sensor" may be understood to be any kind of physical or virtual device, module or machine capable of detecting or receiving real-world information and sending this real-world information to another system, including temperature sensor, humidity sensor, moisture sensor, pH sensor, pressure sensor, soil sensor, crop sensor, water sensor, and cameras.

As used herein, the term "soft-sensor" may be understood to be a virtual device, virtual module, or virtual machine capable of converting one or more inputs from simple sensors and combines them to mimic the output of a more complex sensor.

These and other aspects of the present invention will become apparent from and be elucidated with reference to the embodiments described hereinafter.

### BRIEF DESCRIPTION OF DRAWINGS

Exemplary embodiments of the invention will be described in the following with reference to the following drawings.
Fig. 1 illustrates a block diagram of an exemplary apparatus for training a data-driven model usable as a soft-sensor for measuring a concentration of a physicochemical parameter.
Fig. 2 illustrates a flow chart describing a computer-implemented method for training a data-driven model usable as a soft-sensor for measuring a concentration of a physicochemical parameter.
Fig. 3 illustrates a block diagram of an exemplary apparatus for measuring a concentration of a physicochemical parameter from a target field.
Fig. 4 illustrates an exemplary system for measuring a concentration of a physicochemical parameter from a target field.
Fig. 5 illustrates a flow chart describing a computer-implemented method for measuring a concentration of a physicochemical parameter from a target field.

The figures are merely schematic representations and serve only to illustrate embodiments of the invention. Identical or equivalent elements are in principle provided with the same reference signs.

### DETAILED DESCRIPTION OF EMBODIMENT

Sensing and prediction based on sensor data becomes more and more important. A downside is that in principle for each location one or more sensors are necessary to collect data. In particular, in the technological area of environment protection and agriculture, this may require many expensive sensors well distributed over the world. In addition, these sensors need a fast internet connection.

Towards this end, the apparatus and method as described herein train a data-driven model to learn relationships between sensor and satellite data. The trained data-driven model is then used as a soft-sensor, which is applied to large scale areas to derive estimations of the target physicochemical parameter for the complete area. Through the use of soft-sensors, i.e., the trained data-driven model, the values of objective variables can be estimated with a high degree of accuracy. Their use, however, involves no real sensor deployment. This is particular beneficial for measuring a concentration of a physicochemical parameter from a target field, where no sensors (or no sensors for measuring the target physicochemical parameter) are available. The soft-sensor, i.e., the trained data-driven model, may be used for e.g., crop condition monitoring, soil condition monitoring, and/or environmental condition monitoring. In the following, the apparatus and method are described for soil condition monitoring for illustrative purposes. It will be appreciated that the soft-sensor may be employed for monitoring other physicochemical properties. For example, the soft-sensor may be used for crop condition monitoring, which is usable to steer production of fertilizers and/or pesticides based on the crop condition monitoring.

Fig. 1 illustrates a block diagram of an exemplary apparatus 10 for training a data-driven model usable as a soft-sensor for measuring a concentration of a physicochemical parameter from a target field. The apparatus 10 includes an input unit 12, a processing unit 14, and an output unit 16.

In general, the apparatus 10 may comprise various physical and/or logical components for communicating and manipulating information, which may be implemented as hardware components (e.g. computing devices, processors, logic devices), executable computer program instructions (e.g. firmware, software) to be executed by various hardware components, or any combination thereof, as desired for a given set of design parameters or performance constraints. Although Fig. 1 may show a limited number of components by way of example, it can be appreciated that a greater or a fewer number of components may be employed for a given implementation.

In some implementations, the apparatus 10 may be embodied as, or in, a device or apparatus, such as a server, workstation, or mobile device. The apparatus 10 may comprise one or more microprocessors or computer processors, which execute appropriate software. The processing unit 14 of the apparatus 10 may be embodied by one or more of these processors. The software may have been downloaded and/or stored in a corresponding memory, e.g. a volatile memory such as RAM or a non-volatile memory such as flash. The software may comprise instructions configuring the one or more processors to perform the functions described herein.

It is noted that the apparatus 10 may be implemented with or without employing a processor, and also may be implemented as a combination of dedicated hardware to perform some functions and a processor (e.g. one or more programmed microprocessors and associated circuitry) to perform other functions. For example, the functional units of the apparatus 10, e.g. the input unit 12, the one or more processing units 14, and the output unit 16 may be implemented in the device or apparatus in the form of programmable logic, e.g. as a Field-Programmable Gate Array (FPGA). In general, each functional unit of the apparatus may be implemented in the form of a circuit.

In some implementations, the apparatus 10 may also be implemented in a distributed manner. For example, some or all units of the apparatus 10 may be arranged as separate modules in a distributed architecture and connected in a suitable communication network, such as a 3rd Generation Partnership Project (3GPP) network, a Long Term Evolution (LTE) network, Internet, LAN (Local Area Network), Wireless LAN (Local Area Network), WAN (Wide Area Network), and the like.

The processing unit(s) 14 may execute instructions to perform the method described herein, which will be explained in detail with respect to the example shown in Fig. 2. In some examples, the processing unit(s) 14 may comprise separate modules.

Fig. 2 illustrates a flow chart describing an exemplary computer-implemented method 100 for training a data-driven model usable as a soft-sensor for measuring a concentration of a physicochemical parameter from a target field. In the following, an exemplary order of the steps according to the present disclosure is explained. However, the provided order is not mandatory, i.e. all or several steps may be performed in a different order or simultaneously.

The computer-implemented method 100 may be implemented as a device, module or related component in a set of logic instructions stored in a non-transitory machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof. For example, computer program code to carry out operations shown in the method 100 may be written in any combination of one or more programming languages, including an object oriented programming language such as JAVA, SMALLTALK, C++, Python, or the like and conventional procedural programming languages, such as the "C" programming language or similar programming languages. For example, the exemplary method 100 may be implemented as apparatus 10 shown in Fig. 1.

At block 110, historical satellite imagery data collected from at least one field over the period of time is provided. In general, the historical satellite imagery data may have been acquired by sensors aboard satellites that detect and record reflected or emitted energy. Examples of the satellites may include a medium-earth orbit satellite, a non-polar low-earth orbit satellite, and a high-earth orbit satellite. The historical satellite imagery data may also be referred to as remote sensing data.

The historical satellite imagery data may include data acquired by any suitable remote sensors, such as radiometers, spectrometers, radio detection and ranging (radar) sensors, altimeters, and scatterometers. The remote sensors may operate in the visible, infrared, thermal infrared, and microwave band of the electromagnetic spectrum. Many physical and chemical attributes, such as land and sea surface temperature, vegetation properties, cloud and aerosol properties, forest structure, can be derived from the historical satellite imagery data.

The historical satellite imagery data may be stored in a database, which may be any organized collection of data, which can be stored and accessed electronically from a computer system, and from which data can be retrieved. Some satellites may offer different frequency bands and not all of them may be of interest for a particular problem. The user may select the sources of the image data. The steps until now may be integrated in a problem definer. Satellite data associated with the determined range of interest in the time domain will be fetched from the database. In an alternative approach, satellite imagery data may be collected and stored together with sensor data, in case the system is applied to a problem, where no historical sensor data is available.

Spatial resolution of the historical satellite imagery data is defined by the size of each pixel within a digital image and the area on Earth's surface represented by that pixel. This may vary depending on the satellite's orbit and sensor design. Landsat data, for example, has a 30m resolution, meaning each pixel stands for a 30m x 30m area on the ground. The RapidEye constellation comprises five satellites that provide multispectral RGB imagery, as well as red-edge and NIR bands at 5 m resolution.

At block 120, historical sensor data collected from the at least one field is provided.

The historical sensor data provides a measurement or an estimation of the concentration of the physicochemical parameter over the period of time. In some examples, the historical sensor data and the historical satellite data may have been acquired at the same period of time. For example, if the time when the SOC sample was taken is available, the historical satellite images data that is closest in time to the SOC measurement date may be retrieved. In some other examples, it may be considered to use the hypothesis that values of the physicochemical parameter are relatively stable overtime. For example, if the soil sample was taken in 2015, but a valid satellite image from 2021 is available, it is still possible to match the satellite image to the soil sample despite the rather large temporal distance.

In some examples, the historical sensor data may have been acquired by sensors that may include any kind of physical or virtual device, module or machine capable of detecting or receiving real-world information and sending this real-world information to another system, including temperature sensor, humidity sensor, moisture sensor, pH sensor, pressure sensor, soil sensor, crop sensor, water sensor, cameras, or any combination thereof. In some examples, the historical sensor data may have been acquired by sensors fixed to the ground within fields. In some examples, the historical sensor data may have been acquired by sensors releasably attached or directly mounted to a ground platform (e.g. tractor). In some examples, the historical sensor data are manual measurements on certain locations in the at least one field.

The historical sensor data may be stored in a database. Via a web service, the user can select and upload historical sensor data. For example, a time stamp may be extracted from the historical sensor data. In an alternative, a range of interest in the time domain can be entered by the user (e.g. via a calendar).

Based on the historical sensor data, the physicochemical parameter in the at least one field is determined. The physicochemical parameter may be defined according to the problem to be solved. Examples of the physicochemical parameter may include, but are not limited to, a crop parameter (e.g. crop type, crop growth stage, etc.), a soil parameter (e.g. soil properties, microclimate, moisture, adsorption potential, etc.), an environmental parameter (e.g. temperature, humidity, sunlight, etc.), or any combination thereof.

As an example, the crop growth stage of a crop in the field may be derived from image data of the crop on the field acquired by a camera. For example, an automated machine-based determination or recognition process may be used for a specific type of crop starting from the image data, pre-processing of the image data, deriving metadata from the digital image and using there by e.g. neural network based classifier for a probability based analysis of the image data, and finally a recognition on one or more types of crops. Spectral signatures, thermal signatures and/or texture specifications of the crops may be used for determine the current crop growth stage of the crops on the field and derive the expected crop growth stage.

At block 130, the data-driven model is trained with a training dataset comprising a plurality of training examples. Each training example comprises a historical satellite imagery data example associated with a given time point or range and the determined physicochemical parameter associated with the given time point or range.

The training process may comprise the steps of data pre-processing, stack preparation, segmentation, and classification/regression.

During data pre-processing, each input data source may comprise its own pre-processing pipeline. Depending on the data source, pre-processing may apply image corrections (e.g. atmospheric corrections for Sentinel 2 data) and derives auxiliary data (e.g. masks indicating clouds and invalid measurements or derived quantities like vegetation indices). Larger areas of interest may require the data to be split in smaller portions (e.g. subtiling) for efficient processing. A second major objective of pre-processing is to align the data to a common subtiling grid by applying operations like projections, cropping, temporal and spatial resampling. Pre-processed data may be finally stored in a database managed file system (hot storage) to allow sustainable and fast access to consistent data (application independent).

The stack preparation manages the merging of the different spatial and spatio-temporal data (e.g. Sentinel 1/2, environmental data, etc.) into one combined data stack. Depending on the application, the stack preparation process may offer multiple modes. The composite strategy may use available input data of a given time range and creates artificial, derived composites by combining pixels of equal data source and spatial position, but different temporal positions (e.g. by averaging). Derived masks, such as cloud masks or vegetation masks, may be included to restrict the compositing to pixels of certain characteristics. One feature of the image time series preparation is the interpolation of missing or invalid data points (e.g. due to clouds in optical satellite data) and the temporal resampling to a user-defined time grid. Application specific requirements may determine the characteristics of the stack (e.g. data sources, time range, sampling dates). Individual stacks may be generated for the unique needs of the subsequently described analysis processes.

During the segmentation, semantic spatial boundaries may be needed for various applications to separate connected pixel groups by assigning them to individual groups (e.g. field boundaries for crop classification) and are additionally an important benefit for semantic averaging of noisy input data (e.g. radar data of Sentinel 1 satellite). The segmentation approach may combine multiple single observation (or observations of a rather short time period) segmentation results to a final, more stable, boundary map. Boundaries together with the processed data stacks may subsequently be used for object-based classification approaches (OBIA) or may be combined with pixel classification/regression results in a final post-processing step.

The process of classification/regression incorporates the training of a model, which links the available spatio-temporal sensor data (univariate, e.g. individual land cover types/markers or laboratory measurements) as target quantity (costly data with sparse availability) to the input data (large-scale availability). The processes allow training on an individual pixel level, as well as object-based image classification/regression (requiring the segmentation process). For a pixel-based approach, individual pixel features are created from the prepared image stack. The object-based approach extracts derived features like the mean and standard deviation of pixel values within a given boundary. The reusable model can be exchanged by a retrained model as soon as new data is available.

After the training, the model can be used to infer the target quantity in new areas.

In the following, an exemplary training method will be explained in detail with respect to a model for predicting SOC in cropland using satellite imagery data from Sentinel 2, possibly supported by environmental data and/or soil composition data.

At block 110, historical satellite imagery data collected from the at least one field over a period of time is provided. In this example, Sentinel 2 images may be provided covering e.g. Feb-Mar and Aug-Sep from 2017 to 2021. For some SOC samples locations, more than 100 unique Sentinel 2 images may be available.

During data pre-processing, a single combined dataset may be calculated comprising a target variable (i.e. the SOC values) and several explanatory features computed from the raw satellite imagery data.

An exemplary workflow will be discussed below. The Sentinel 2 data may be filtered using cloud masks and a cropland mask in order to dismiss data disguised by clouds and cloud shadows and data that does not belong to the cropland. The bare soil may be filtered using the bare soil index (BSI) in order to dismiss data where the cropland is not bare. As an example, the data may be kept if BSI>0.021.

The received historical satellite imagery data may be grouped into one or more satellite imagery data groups. Each satellite imagery data group may comprise historical satellite imagery data collected over a respective time range. For each satellite imagery data group, single satellite imagery data may be determined representing the respective satellite imagery data group. The historical satellite imagery data example in each training example may comprise the single satellite imagery data associated with the given time point or range.

In some examples, the satellite imagery data may be grouped per season. A season may refer to either Feb-Mar, i.e. spring season, or Aug-Sep, i.e. summer season of a given year. For each season, only the image with the highest bare soil index may be used. In some examples, the satellite imagery data may be grouped per month over all years. In some examples, it is possible to select only one month and group images for this month over all available years. In some examples, it is possible to group over all images.

For each group, we can obtain a single data point per group. In some examples, the single satellite imagery data may comprise an image having a plurality of pixels, each pixel being selected from images in the satellite imagery data group based on a bare soil index value evaluated for the said pixel. For example, the bare soil index value may be evaluated for each pixel independently on its own. Therefore, the resulting image is not a single image of the imagery data group, but usually a combination of the different images. In some examples, an average may be computed over all images and the average represents the single data point per group. In some examples, it is possible to take the median for each feature, which may be used to represent the single data point per group. In some examples, the single satellite imagery data may comprise an image containing satellite features selected for each pixel at a similar time point in an agricultural development stage determined via spectral index time series within the satellite imagery data group. For example, one of the image composition approaches included finding by a spectral index (NDVI) for each pixel the time point of greening up of the successive crop. This allows for identifying observations before greening up which should be very consistent also for fields with very different seeding time points.

At block 120, historical sensor data collected from the at least one field is provided. As an example, the following raw sensor data may be collected. SOC measurements for various soil samples together with metadata (e.g. location, origin of the data, parent material) may be retrieved from a database. Environmental data may be retrieved e.g. from a third party, e.g. a service provider, and/or provided by on-site sensors, such as temperature sensor and humidity sensor. The environmental data may comprise e.g. monthly averages on temperature, precipitation, and humidity for Feb-Mar and Aug-Sep from 2017 to 2021.

During data pre-processing, implausible values in the SOC data may be discarded. For example, SOC data with identical SOC value, coordinates, and all metadata may be discarded. For example, it may be considered to detect clusters (i.e. small areas) where many soil samples seem to be identical except for some metadata (e.g. all information is equal except for the crop type) and such duplicates may be discarded. In this way, only unique soil samples may be used.

As discussed hereinbefore, some metadata may also be retrieved from the database together with the SOC measurements. The metadata may include various information about the SOC samples. For example, the metadata may include information about country in which the SOC sample has been taken. The metadata may include exact coordinates where the SOC sample has been taken. The metadata may also include information about original data source of the SOC sample. The metadata may further include information about soil texture, such as which percentage of the soil is made of sand, silt, and clay.

Using the information from the metadata, the predictive accuracy may be boosted by selecting a more homogeneous subset of the data and using only this data for training the data-driven model. In some examples, the data may be restricted to one country. In some examples, the data may be restricted to a small test area. In some examples, only one data source may be used, e.g. in the case that different data sources use different sampling techniques. In some examples, the data may be restricted to samples of similar sand-silt-clay composition.

Based on the historical sensor data, the physicochemical parameter in the at least one field is determined. In this example, the physicochemical parameter is the SOC data, which can be derived from the collected sensor data.

The SOC data is then combined with the pre-processed satellite imagery data. This may be done by matching every SOC sample to all satellite images for the coordinate at which the SOC sample was taken. It may be considered to use the hypothesis that SOC values are relatively stable overtime. If the soil sample was taken in 2015, but a valid satellite image from 2021 is available, it is still possible to match the satellite image to the soil sample despite the rather large temporal distance.

The SOC data and the pre-processed satellite imagery data then form a plurality of training samples for training the data-driven model.

At block 130, a data-driven model is trained with the training dataset comprising a plurality of training examples. Examples of the data-driven model may include, but are not limited to, support vector machines (SVM), artificial neural network (ANN), and random forest. As an example, the random forest algorithm may be trained on the training data. This algorithm trains an ensemble of decision trees, each of which sees a different subset of the available training data.

The following strategies may be used that affect the learning and evaluation of the algorithm.

In order to get a realistic estimation of the prediction accuracy, the data-driven model may be evaluated on an unseen test set. For example, all training samples with the same coordinates may be added either completely to the training set or completely to the test set. This approach may prevent the algorithm from just memorizing the location instead of learning actual dependencies between SOC values and satellite imagery data.

Each data-driven model may have its own hyperparameters that affect the learning. For the Random Forest algorithm, these may include the number of trained decision trees, minimum number of samples required in a leaf of the tree, minimal decrease of impurity required for splitting. Cross-validation may be used in order to find an optimal configuration of hyperparameters. Cross-validation is to evaluate several hyperparameter configurations on a test set and take the one performing best.

The trained model is then used for new data.

For certain physicochemical parameter (e.g. SOC), environmental data may be provided to improve the training of the data-driven model. Thus, historical environmental data collected from the at least one field over the period of time may be retrieved from a database. Each training example may further comprise an historical environmental data example associated with the given time point or range.

The received historical environmental data may also be grouped into one or more environmental data groups, each environmental data group comprising historical environmental data collected over a respective time range. For each environmental data group, single environmental data may be determined representing the respective environmental data group. The historical environmental data example in each training example may comprise the single environmental data associated with the given time point or range. For example, monthly averages (or daily averages) on temperature, precipitation, humidity, and/or other historical environmental data may be determined. The historical satellite imagery data may be matched to the environmental data of the same month (or the same day).

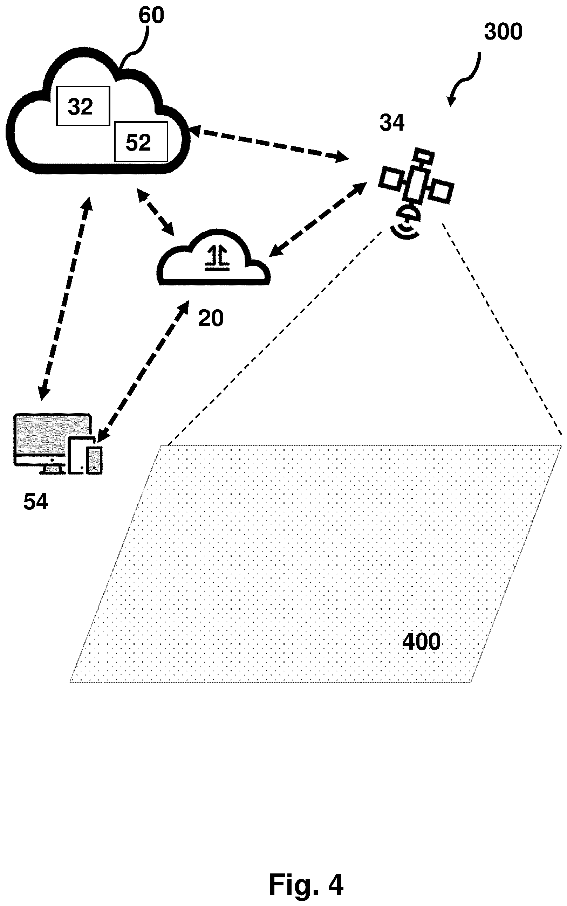

Fig. 3 illustrates a block diagram of an exemplary apparatus 20 for measuring a concentration of a physicochemical parameter from a target field and an exemplary data flow. In some examples, the apparatus 20 shown in Fig. 3 and the apparatus 10 shown in Fig. 1 may be embodied as, or in, the same device. In some examples, the apparatus 20 shown in Fig. 3 and the apparatus 10 shown in Fig. 1 may be embodiment as, or in, different devices. This will be further explained in an exemplary system shown in Fig. 4.

In a first step, data sources 30 are made available, wherein the data sources can be for example input database 32. The term "input database" is understood to be any organized collection of data, which can be stored and accessed electronically from a computer system, and from which data can be inputted or transferred to the apparatus 20. The input database 32 may comprise satellite imagery data. The data sources 30 may also include data being accessible from a satellite 34.

In a next step, data which originated from the data sources 30 may be optionally pre-processed in the data pre-processing section 40, wherein such data pre-processing may include data calibration, data transformation (e.g. into a different format), data correction, data validation and data verification. For example, data pre-processing for the satellite imagery data may include cloud detection, atmospheric correction, validity masks algorithms, automatic field Boundary detection, bare soil composite creation, and/or any other suitable pre-processing algorithms. The satellite imagery data is then received by the data input 22 of the apparatus 20.

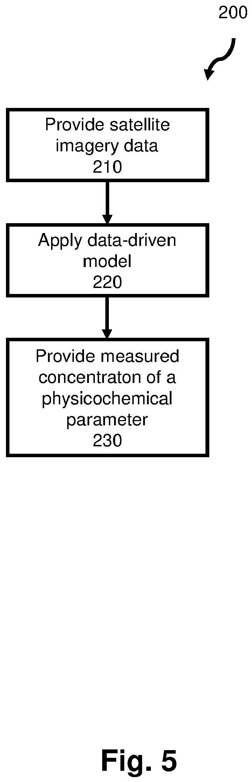

In a further step, the satellite imagery data is processed by the apparatus 20 in the data processing section 24 utilizing a data-driven module, which has been trained according to the training method as described herein. An exemplary training method is described with respect to the example shown in Fig. 2. The data processing unit 24 may be part of, or include an Application Specific Integrated Circuit (ASIC), an electronic circuit, a processor (shared, dedicated, or group) and/or memory (shared, dedicated, or group) that execute one or more software or firmware programs, a combinational logical circuit, and/or other suitable components that provide the described functionality, which will be explained in detail hereinafter and in particular with respect to the example shown in Fig. 5.

The final outputs of the trained data-driven model in the data processing section 24, which may be in form of a map showing an estimated distribution of the physicochemical parameter, are transferred from the apparatus 20, via an output unit 26 (not shown), to the data output layer 50 and for example outputted in an output database 52 and/or on a user device 54. The term "user output device" is understood to be a computer, a smartphone, a tablet, a smartwatch, a monitor, a data storage device, or any other device, by which a user, including humans and robots, can receive data from apparatus 10. The term "output database" is understood to be any organized collection of data, which can be stored and accessed electronically from a computer system, and which can receive data, which is outputted or transferred from the apparatus 10.

Fig. 4 illustrates an exemplary system 300 for measuring a concentration of a physicochemical parameter from a target field 400. The system 300 may comprise the apparatus 20, the satellite 34, the client computer 54, and a database managed file system 60 including the input database 32 and the output database 52.

The satellite 34 may be e.g. a low-earth orbit satellite, a medium-earth orbit satellite, or a high-earth orbit satellite. The satellite 34 may be equipped with one or more remote sensors, such as radiometers, spectrometers, radio detection and ranging (radar) sensors, altimeters, and scatterometers, for acquiring satellite imagery data. The remote sensors may operate in the visible, infrared, thermal infrared, and microwave band of the electromagnetic spectrum. Many physical and chemical attributes, such as land and sea surface temperature, vegetation properties, cloud and aerosol properties, forest structure, can be derived from the acquired satellite imagery data. The input database 32, the apparatus 20, and/or the client computer 54 may be accessible to the satellite 34 to obtain the satellite imagery data.

The input and output databases 32 and 52 may be embodied as, or in, the database managed file system 60, which may be configured to receive and store the acquired satellite imagery data from the satellite 34. The input database 32 may also be configured to send the stored satellite imagery data to the apparatus 20. The output database 52 may store the determined physicochemical parameter e.g. in the format of a map. In the example shown in Fig. 4, the input and output databases 32 and 52 are shown separately. In some other examples, the input and output databases 32 and 52 may be a single database. Further, although the database managed file system 60 is shown as a cloud database in Fig. 4, it can be appreciated that the databases 32, 52 may also be stored in a mobile device, in a workstation, in a server, etc.

The apparatus 20 is configured to receive the acquired satellite imagery data from the satellite 34. Such data may also be received from the input database 32. Based on the received satellite imagery data, the apparatus 20 is configured to predict a distribution of a physicochemical parameter across the target field 400 according to the method as described herein. This will be explained in detail hereinafter and in particular with respect to the example shown in Fig. 5. The predicted concentration of the physicochemical parameter has a higher accuracy than the that of the satellite imagery data. In the example shown in Fig. 4, the apparatus 20 is implemented in a distributed computing environment. However, it can be appreciated that the apparatus 20 may be embodied as, or in, any suitable computing device including, but not limited to, integrated circuit (IC), System-on-a-Chip (SoC), mobile device, workstation, and server. The final outputs of the apparatus 20 may be provided to the output database 52 and/or to the client computer 54.

The client computer 54 may be a personal computer, a mobile phone, a tablet device, etc. A user may use the client computer 54 to instruct the apparatus 20 to process satellite imagery data to determine the physicochemical parameter on the target field 400. The final outputs of the apparatus 20, which may be in form of a map showing an estimated distribution of the physicochemical parameter, may be transferred from the apparatus 20 to the client computer 54 and/or to the output database 52. The client computer 54 may also have an access to the database managed file system 60 to retrieve or upload any desired data.

Fig. 5 illustrates a flow chart describing an exemplary method 200 for measuring a concentration of a physicochemical parameter from a target field. In the following, an exemplary order of the steps according to the present disclosure is explained. However, the provided order is not mandatory, i.e. all or several steps may be performed in a different order or simultaneously. The method 200 may be carried out by an apparatus, such apparatus 20 shown in Fig. 3.

At block 210, satellite imagery data acquired from the target field is received. In general, the trained data-driven model may be used to determine sensor data for any time point or period. In some examples, if the sensor data for a particular time point or period is not available, the trained data-driven model may be used for determining the past sensor data based on past satellite data. For example, the trained data-driven model may be used to determine sensor data for Feb-Mar and Aug-Sep in 2017 based on the satellite data from the same time period. In some examples, the trained data-driven model may be used for determining "current/future" sensor data based on current satellite data.

The acquired satellite imagery data may be selected by the user. For example, via a web service on the client computer 52 shown in Fig. 4, the user can select satellite imagery data from the database 32. In an example, the user can select of a range of interest in the time domain (e.g. via a calendar). The selected satellite imagery data can then be transferred to the apparatus 20 for further processing. In another example, the satellite imagery data may be data that is currently acquired by the satellite 34, which can be transferred from the satellite 34 to the apparatus 20 for further processing.

At block 220, a data-driven model is applied to the received satellite imagery data to determine the physicochemical parameter in the field. The data-driven model was trained on a training dataset according to the method as described herein. An exemplary training method is described hereinbefore with respect to the example shown in Fig. 2.

In other words, after the training, the model can be used to infer the target quantity in new areas. The processes may allow inference on an individual pixel level, as well as object based image classification/regression which may require the segmentation process. For a pixel-based approach, individual pixel features are created from the prepared image stack, the object based approach extracts derived features like the mean and standard deviation of pixel values within a given boundary.

An independent processing step, besides the actual classification/regression, may allow the implementation of rule-based expert knowledge, which can be connected in a post-processing step at the end with the actual classification/regression results. These expert rules can for example encode crop type specific growing patterns or general (e.g. local) agricultural practices.

The post-processing may link the inference results from the classification/regression process to the expert knowledge based results of the activity scoring or additional expert insights such as minimum field size. In a final steps, the results are prepared, which may involve derivation of threshold based boundaries on pixel based results, cleaning of boundaries, calculation of areas and determination of region-specific prediction thresholds (e.g. using matching mechanism to include auxiliary insights like regional distribution numbers).

At block 230, the measured concentration of the physicochemical parameter is provided, which is preferably usable for monitoring crop health, soil quality, or a combination thereof. The determined physicochemical parameter may be displayed or stored in the format of maps, as mapping is useful to define spatial trends and homogeneous zones.

In another exemplary embodiment of the present invention, a computer program or a computer program element is provided that is characterized by being adapted to execute the method steps of the method according to one of the preceding embodiments, on an appropriate system. The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of an user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.
According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A computer-implemented method (100) for training a data-driven model usable as a soft-sensor for measuring a concentration of a physicochemical parameter from a target field, the method comprising:
a) providing (110) historical satellite imagery data collected from at least one field over a period of time;
b) providing (120) historical sensor data collected from the at least one field, wherein the historical sensor data provides a measurement or an estimation of the concentration of the physicochemical parameter over the period of time; and
c) training (130) the data-driven model with a training dataset based on the provided historical satellite imagery data and the historical sensor data, wherein the trained data-driven model is usable as a soft-sensor for measuring a concentration of the physicochemical parameter from the target field based on satellite imagery data acquired from the target field.

2. The computer-implemented method according to claim 1,
wherein the physicochemical parameter comprises:
- a physicochemical parameter measured from a crop on the at least one field;
- a physicochemical parameter measured from a soil of the at least one field;
- a physicochemical parameter measured from an atmosphere over the at least one field; or
- any combination thereof.

3. The computer-implemented method according to claim 1 or 2,
wherein the historical sensor data comprises data collected from a plurality of sensors distributed over the at least one field.

4. The computer-implemented method according to any one of the preceding claims,
wherein the received historical satellite imagery data is grouped into one or more satellite imagery data groups, each satellite imagery data group comprising historical satellite imagery data collected over a respective time range; and
wherein, for each satellite imagery data group, single satellite imagery data is determined representing the respective satellite imagery data group.

5. The computer-implemented method according to claim 4,
wherein the single satellite imagery data representing each satellite imagery data group comprises:
- an image having a plurality of pixels, wherein each pixel is selected from images in the satellite imagery data group based on a bare soil index value evaluated for the said pixel;
- an average over historical satellite imagery data within the satellite imagery data group;
- a median for each feature derived from the historical satellite imagery data within the satellite imagery data group; or
- an image containing satellite features selected for each pixel at a similar time point in an agricultural development stage determined via spectral index time series within the satellite imagery data group.

6. The computer-implemented method according to any one of the preceding claims,
wherein historical environmental data collected from the at least one field over the period of time is received; and
wherein the historical environmental data is added to the data-driven model for auxiliary enrichment.

7. The computer-implemented method according to claim 6,
wherein the received historical environmental data is grouped into one or more environmental data groups, each environmental data group comprising historical environmental data collected over a respective time range; and
wherein, for each environmental data group, single environmental data is determined representing the respective environmental data group..

8. The computer-implemented method according to any one of the preceding claims,
wherein at least one feature is extracted from the historical satellite imagery data; and
wherein the training dataset further comprises the at least one extracted feature.

9. The computer-implemented method according to any one of the preceding claims,
wherein the data-driven model comprises a random forest algorithm.

10. A computer-implemented method for measuring a concentration of a physicochemical parameter from a target field, comprising:
- receiving satellite imagery data acquired from the target field;
- applying a soft-sensor to measure the concentration of the physicochemical parameter based on the received satellite imagery data, wherein the soft-sensor comprises a data-driven model that has been trained according to the method of any one of the preceding claims;
- providing the measured concentration of the physicochemical parameter.

11. The computer-implemented method according to claim 10,
wherein environmental data acquired from the target field is received; and
wherein the soft-sensor is applied to measure the concentration of the physicochemical parameter based on the received satellite imagery data and the received environmental data .

12. The computer-implemented method according to claim 10 or 11,
wherein the measured concentration of the physicochemical parameter is post-processed with a prescribed knowledge-based rule.

13. An apparatus for training a data-driven model usable as a soft-sensor for measuring a concentration of a physicochemical parameter from a target field, comprising one or more processing units for carrying out the method of any one of claims 1 to 9.

14. An apparatus for measuring a concentration of a physicochemical parameter from a target field, comprising one or more processing units for carrying out the method of any one of claims 10 to 13.

15. A computer program product comprising instructions which, when the program is executed by one or more processing units, cause the one or more processing units to carry out the method of any one of claims 1 to 9 to train a data-driven model usable as a soft-sensor for measuring a concentration of a physicochemical parameter from a target field or to carry out the method of any one of claims 10 to 13 to measure a concentration of a physicochemical parameter from a target field.
